Europäisches Patentamt

European Patent Office

Office européen des brevets

(19)

(11) **EP 1 124 337 A2**

(12) **EUROPEAN PATENT APPLICATION**

(43) Date of publication:
**16.08.2001 Bulletin 2001/33**

(51) Int Cl.⁷: **H04B 1/48**, H04B 7/08,
H04L 12/28, H04B 1/707

(21) Application number: **01660030.6**

(22) Date of filing: **12.02.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **11.02.2000 US 501979**<br><br>(71) Applicant: **Nokia Inc.**<br>**Irving, TX 75039 (US)** | (72) Inventors:<br>• **Posti, Jarkko**<br>**34240 Kammenniemi (FI)**<br>• **Väänänen, Paavo**<br>**33720 Tampere (FI)**<br>• **Erva, Klaus**<br>**33720 Tempere (FI)**<br><br>(74) Representative: **Johansson, Folke Anders**<br>**Nokia Corporation,**<br>**P.O. Box 206**<br>**00045 Nokia Group (FI)** |

(54) **Switchless half-duplex transceiver front end**

(57) In a half-duplex transceiver used in mobile terminals such as cell phones, hand-held cellular terminals and laptop computers that require two antennas, switches used to select the antennas may be eliminated. Instead a bias current is used to condition a PA and LNAs associated with antennas to create the communication path. In a system with two antennas for receiving and one PA for transmitting the front end is designed so that it is possible to receive through either of the antennas or transmit through one antenna without having switches in the signal paths to direct the signal. During transmission the bias currents of the LNAs associated with antennas are turned off and the input impedance of one LNA is such that the output power of the PA is directed to an antenna. In a receiving state only one of the LNAs is used and the PA bias is turned off. A receive path for a selected antenna is chosen by turning on one of the LNAs. The PA's impedance is such that if receiving through the selected antenna the power is directed to the LNA input associated with it. The same method is applied to in LNA outputs. A BT (Bluetooth) module may be used in the system by providing access through a switch S1 to an antenna.

**FIG. 6**

## Description

FIELD OF THE INVENTION

The invention pertains to half duplex transceivers used in mobile communication devices. It eliminates switches used to select among antennas used in diversity receiving and transmission in a half-duplex receiver. It also provides a means to prevent signal leakage between a power amplifier and low noise amplifier during the transmission by a half duplex transceiver and reduces power consumption.

BACKGROUND OF THE INVENTION

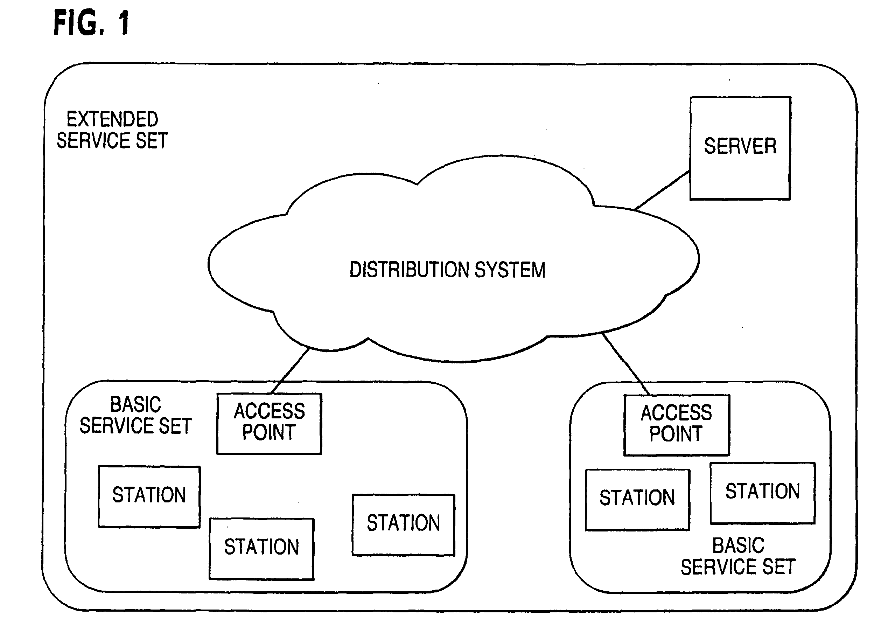

In following abbreviations will be used, the definitions of which are explained at the end of the description. Mobile terminals such as mobile phones, notebook/laptop computers and the like that have a WLAN PC card, can communicate among themselves, as well as through a WLAN network server. The network server provides support for communication between mobile terminals in different service sets (service areas) that are associated with different APs. Such networks allow mobile terminals to be moved within a particular service area without regard to physical connections among the mobile terminals within that service area. Referring to Figure 1, an example is illustrated of a model network conforming to IEEE Standard 802.11. Discussion of the IEEE 802.11 standard for WLAN architectures is found on pages 442-443 of the text Data and Computer Communications, 5th Ed., by Wm. Stallings, published 1997 by Prentice-Hall, Inc. Typically, all messages transmitted among the mobile terminals of the same cell (same AP) in such WLAN schemes must be transmitted to the AP rather then directly transmitted between the mobile terminals. Such centralized wireless communication provides significant advantages in terms of simplicity of the communication linkup as well as in power savings.

The 802.11 working group took on the task of developing a global standard for radio equipment and networks operating in the 2.4GHz unlicensed frequency band for data rates of 1 and 2Mbps. The standard does not specify technology or implementation but simply specifications for the physical layer and Media Access Control (MAC) layer. The standard allows for manufacturers of wireless LAN radio equipment to build interoperable network equipment. Our project will involve validating that all hardware chosen follow the 802.11 standard. The IEEE 802.11 represents the first standard for WLAN products from an internationally recognized, independent organization.

The IEEE 802.11 standard defines the protocol for two types of networks:
Ad-hoc and client/server networks. A simple network where communications are established between multiple stations in a given coverage area without the use of an access point or server is referred to as an Ad-hoc network. In order for all stations to have fair access the wireless media, the standard specifies the rules that each station must observe so that they all have fair access to the wireless media. To ensure that throughput is maximized for all of the users, it also provides methods for arbitrating requests to use the media. The client/server network uses an access point that controls the allocation of transmit time for all stations and allows mobile stations to roam from cell to cell. The access point is used to handle traffic from the mobile ratio to the wired or wireless backbone of the client/server network. This arrangement ensures proper handling of the data traffic. The access point routes data between the stations and other wireless stations or to and from the network server.

The Physical Layer in any network defines the modulation and signaling characteristics for the transmission of data. At the physical layer, two RF transmission methods and one infrared are defined. Operation of the WLAN in unlicensed RF bands requires the use of spread spectrum modulation to meet the requirements for operation in most countries. There are two RF transmission standards: Frequency Hopping Spread Spectrum (FHSS) and Direct Sequence Spread Spectrum (DSSS). Both architectures are defined for operation in the licensed free 2.4GHz frequency band typically occupying the 83MHz of bandwidth from 2.400GHz to 2.483GHz. Differential BPSK (DBPSK) and DQPSK is the modulation for the direct sequence. Frequency hoping uses 2-4 rules governed by FCC part 15 for operation in the United States. Antenna gain is also limited to 6dBi maximum. The radiated power is limited to 1W for the United States, 1-mW per 1MHz in Europe and 1-mQ Japan. There are different frequencies approved for use in Japan, United States and Europe and any WLAN product must meet the requirements for the country where it is sold. The physical layer data rate for FHSS system is 1 MBPS. For DSSS both 1 MBPS and 2MBPS data rates are supported. The choice between FHSS and DSSS will depend on a number of factors related to the users application and the environment that the system will be operating.

One infrared standard is supported which operates in the 850-to-950nM band with peak power of 2W. The modulation for infrared is accomplished using either 4 or 16-level pulse-positioning modulation. The physical layer supports two data rates; 1 and 2Mbps.

The DSSS physical layer uses an 11-bit Barker Sequence to spread the data before it is transmitted. Each bit transmitted is modulated by the 11-bit sequence. This process spreads the RF energy across a wider bandwidth than would be required to transmit the raw data. The ratio of chips per bit is called the "spreading ratio". A high spreading ratio increases the resistance of the signal to interference. A low spreading ratio increases the net bandwidth available to a user. In practice, DSSS spreading ratios are quite small. Virtually all manufacturers of 2.4GHz products offer a spreading ratio of less than 20. The proposed IEEE 802.11 standard specifies a spreading ratio of 11. The FCC requires that the spreading ratio must be grater than 10. The processing gain of the system is defined as 10x the log of the ratio of spreading rate (also known as the chip rate) to the data. The receiver despreads the RF input to recover the original data. The advantage of this technique is that it reduces the effect of narrowband sources of interference. This sequence provides 10.4dB of processing gain, which meets the minimum requirements for the rules set forth by the FCC. The spreading architecture used in the direct sequence physical layer is not to be confused with CDMA. All 802.11 compliant products utilize same PN code and therefore do not have a set of codes available as is required for CDMA operation. FHSS spreads the signal by transmitting a short burst on one frequency, "hopping" to another frequency for another short burst and so on. The source and destination of a transmission must be synchronized so they are not the same frequency at the same time. The FHSS physical layer has 22 hop patterns to choose from. The frequency hop physical layer is required to hop across the 2.4GHz ISM band covering 79 channels. Each channel occupies 1 Mhz of bandwidth and must hop at the minimum rate specified by the regulatory bodies of the intended country. A minimum hop rate of 2.5 hops per second is specified for the United states. Each of the physical layers uses their own unique header to synchronize the receiver and to determine signal modulation format and data packet length. The physical layer headers are always transmitted at 1Mbps. Predefined fields in the headers provide the option to increase the data rate to 2MBPS for the actual data packet.

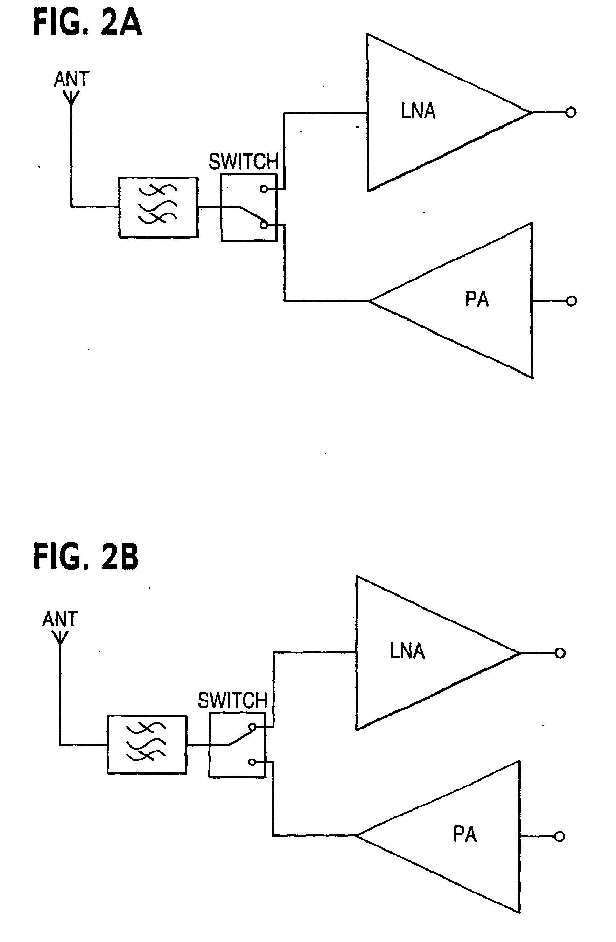

The MAC layer specification for 802.11 has similarities to the 802.3 Ethemet wired line standard. The protocol for 802.11 uses a protocol scheme known as Carrier Sense Multiple Access with Collision Avoidance or CSMA/CA. This protocol avoids collisions instead of detecting a collision like the algorithm used in 802.3. It is difficult to detect collisions in an RF transmission network and it is for this reason that collision avoidance is used. The MAC layer operates together with the physical layer by sampling the energy over the medium transmitting data. The physical layer uses a clear channel assessment (CCA) algorithm to determine if the channel is clear. This is accomplished by measuring the RF energy at the antenna and determining the strength of the received signal. This measured signal is commonly know as RSSI. If the received signal strength is below a specified threshold the channel is declared clear and the MAC layer is given the clear channel status for data transmission. If the RF energy is above the threshold, data transmissions are deferred in accordance with the protocol rules. The standard provides another option for CCA that can be alone or with the RSSI measurement. Carrier sense can be used to determine if the channel is available. This technique is more selective sense since it verifies that the signal is the same carrier type as 802.11 transmitters. The best method to use depends upon the levels of interference in the operating environment. The CSMA/CA protocol allows for the options that can minimize collisions by using request to send (RTS), clear-to-send (CTS), data and acknowledge (ACK) transmission frames, in a sequential fashion. Communications is established when one of the wireless nodes sends a short message RTS frame. The RTS frame includes a destination and the length of the message. The message duration is known as the network allocation vector (NAV). The NAV alerts all others in the medium, to back off for the duration of the transmission. The receiving station issues a CTS frame, which echoes the sender's address and the NAV. If the CTS frame is not received, it is assumed that a collision occurred and the RTS process starts over. After the data frame is received, an ACK frame is sent back verifying a successful data transmission. A common limitation with wireless land systems is the "hidden node" problem. This can disrupt 40% or more of the communications in a highly loaded land environment. It occurs when there is a station in a service set that cannot detect a transmission of another station to detect the media is busy. In figure 2 stations A and B can communicate. However, an obstruction prevents station C from receiving station A and it cannot determine the channel is busy. Therefore, both stations A and C could try to transmit at the same to station B. The use of RTS, CTS, Data and ACK sequences helps prevent the disruptions caused by this problem.

Security provisions are addressed in the standard as an optional feature for those concerned about eavesdropping. The data security is accomplished by complex encryption technique known as the Wired Equivalent Privacy Algorithm (WEP). WEP is based on detecting the transmitted data over the RF medium using a 64-bit seed key and the RC 4 encryption algorithm. WEP, when enabled, only protects the data packet information and does not protect the physical layer header so that other stations on the network can listen to the controlled data needed to manage the network. However, the other stations cannot decrypt the data portions of the packet. Power management is supported at the MAC level for those applications requiring mobility under battery operation. Provisions are made in the protocol for the portable stations to go to low power "sleep" mode during a time interval defined by the base station.

A new technology has been developed that expands the use of mobile phones in related hand-held mobile terminals using the same 2.4 GHz ISM band as that employed by WLAN communication. It conforms to the IEEE 802.11 standard for DSSS radio communication, the contents of which are incorporated herein by reference. This new technology is referred to as Bluetooth (BT) which is a low-powered radio technology, having a range of approximately 10 cm to 10 m, but can be extended for greater distance by increasing the transmit power level.

The frequency band of this new technology calls for an ISM radio band at 2.4 GHz. It is a license-free spectrum band available worldwide in the WLAN radio ISM band that conforms to IEEE 802.11 standard for DSSS radio communication. Employment of this low power/lower range ISM band to mobile phone technology means that cable hook-ups are no longer required between laptop computers and cellular (or cell) phones to send E-mail. It enables surfing the Internet on a laptop, using a mobile phone as the Internet access. A mobile terminal is no longer limited to a BSS link, consisting of a number of stations executing the same MAC protocol competing for access to a shared medium.

The basic service set may be isolated or it may be connected to a backbone distribution system through an access point, the access point functioning as a bridge. The MAC protocol may be fully distributed or controlled by a central coordinated function housed in the access point. The basic service set generally corresponds to what is referred to as a cell in the literature. An ESS consists of two or more basic service sets interconnected by a distribution system. Typically, such distribution system is a wired backbone LAN. The extended service set appears as a single logical LAN to the LLC level.

In a WLAN link-up, a single access transceiver typically supports a small group of co-located users within a range of less than thirty to several hundred meters. BT technology enables users to connect their mobile computers, digital cellular phones, hand-held devices, network access points and other mobile devices by wireless short-range radio links, unimpeded by line-of-site restrictions using substantially less power. BT technology increases the ease of wireless communication by the ordinary citizen, as well as the scope of wireless connectivity. Since BT is limited to short range communication, typically less than 10 meters, it uses a considerably lower power level than that of WLAN. For example, a mobile phone WLAN DSSS radio operating in the 2.4 GHz ISM band has a 30-50 meter range. It requires about 100 mW power level. Whereas, a BT ISM FHSS radio or, simply, a BT ISM spread spectrum radio requires about 1 mW power level. This technology enables portable electronic devices to connect and communicate wirelessly via short-range ad hoc networks.

BT requires a radio frequency that is license-free and open to any radio. The 2.4 GHz ISM band satisfies this requirement since it is actually a 2.4-2.483 GHz radio band. With BT radio in a mobile phone, an Internet connection is made while the user is mobile. Because there are no line-of-site requirements for BT devices, it is well suited for wireless connectivity, such as between a mobile phone and a notebook computer. Users are able to automatically receive E-mail on their notebook or laptop computers by the digital cellular phones or synchronize their primary PC with their hand-held computer without taking it out of their briefcase. The omni-directional capability of Bluetooth allows synchronization to start when the phone is brought into range of the PC. It allows for a gross data rate of 1 Mbit/second, with second generation plans to be increased to a ratio of 2 Mbit/second. It uses packets switching protocol based on a frequency-hopping scheme (analogous to IEEE 802.11 standard). Authentication and encryption is also included, for security reasons, as part of the base band protocol. Authentication relies on utilizing a secret key (i.e., password or PIN), thereby assuring security.

The WLAN standard IEEE 802.11 supports diversity signal receiving. It requires that transceivers have two antennas one of which is selected in the receiving mode and the other made passive. During transmission in half duplex transceivers the receiver side should not load the power amplifier to minimize signal leakage from the PA's output to the LNA input. The same is true when the transceiver is in the receive state. It is desirable to avoid signal power bleeding elsewhere.

Previously, during the transmission phase the input of the LNA is isolated from the PA output by using a switch as shown in Figure 2A. In the receive state the switch selects the other position and the PA output becomes isolated from the LNA input as shown in Figure 2(b). This is a satisfactory solution if the switches' attenuation is low when closed and high when opened.

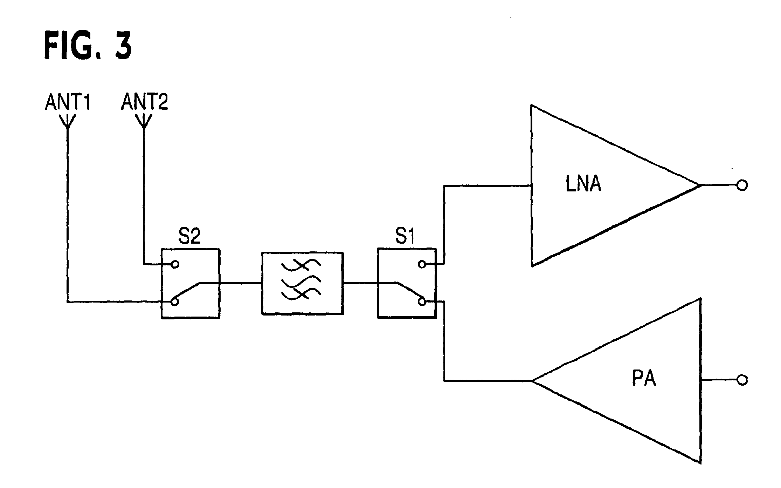

Diversity receiving can be achieved adding one more switch on the signal path as shown in Figure 3. In this circuit the switch S1 is used to select between a PA and a LNA as in Figure 2A and B. The switch is in series with S1 and S2 selects ANT1 or ANT2.

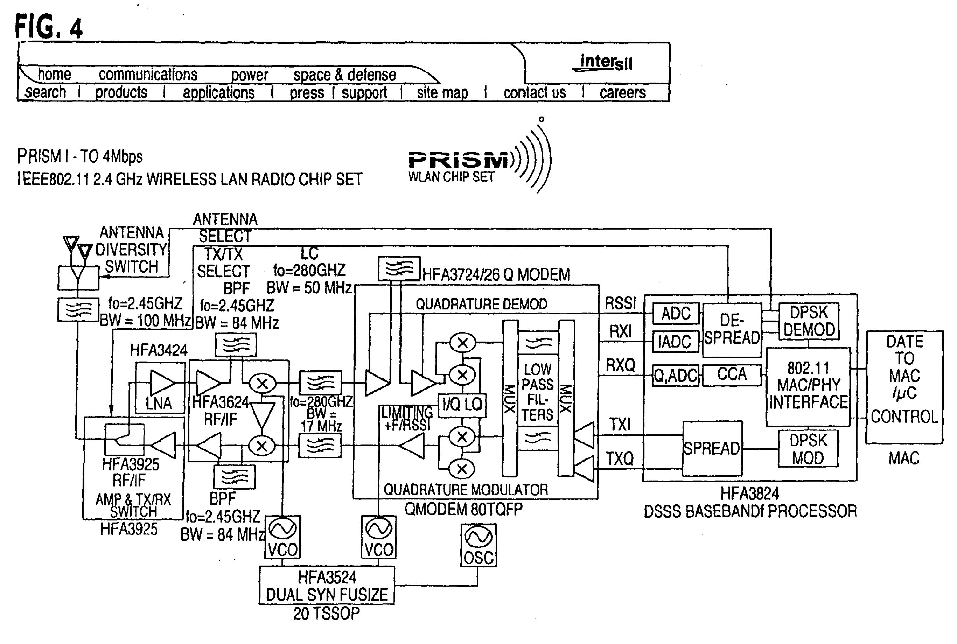

Referring to Figure 4 a half-duplex architecture is shown based on the solution above described. The figure shows the architecture of the intersil PRISM1 radio chipset for 11 Mbps 2.4GHz WLAN.

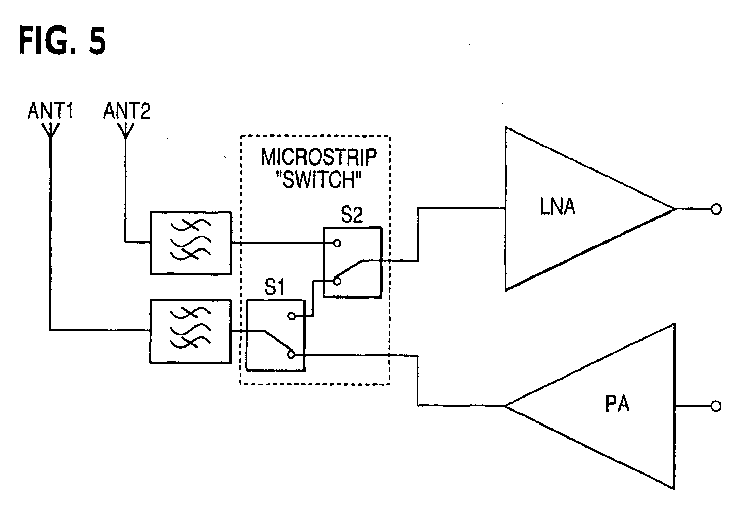

Another way to address the problem is that chosen by AT&T as shown in Figure 5. This approach utilizes micro strip switches to change the impedance seen by the PA and LNA connected to the antenna and so enables a similar switching function to the one previously described using conventional switches. The advantage to this arrangement is that there are no actual switches on the signal path. The micro switch has three possible states. In the transmit state ANTI is selected and S1 connects the output of the PA to the ANT1. In the *receive state* S1 is in opposite state and S2 is selecting the antenna used for receiving.

European Patent Application 94302875.3, Publ. No. 0 623 967 A1, Date of Filing 22.04.94, assigned to AT&T Global Information Solutions Inc. describes an antenna that has L-shaped members extending parallel to a ground plane that may be in a miniaturized form. Two antennas may be in the same ground plane so as to provide antenna diversity. A switch means is provided between the antennas in the receive mode and for switching to only one of said antennas in a transmit mode. The switch means is arranged to ground a feed connector of the antenna member that is not selected for transmission or reception so as to render that antenna member passive.

Other disclosures of general interest are U.S. Patent No. 5,694,417, assigned to Harris Corporation. It relates to a direct sequence spread spectrum receiver and method for acquiring radio-frequency signals for acquiring data from signals which have been transmitted in a spread spectrum system. European Patent Application No. 98103451.5 assigned to Harris Corporation pertains to a spread spectrum transceiver and a method for PA transmitting. The front end is designed so that it is possible to permit it to operate at higher data rates than conventional transceivers. It also allows a spread spectrum transceiver to switch on the fly between different data rates and/or formats.

SUMMARY OF THE INVENTION

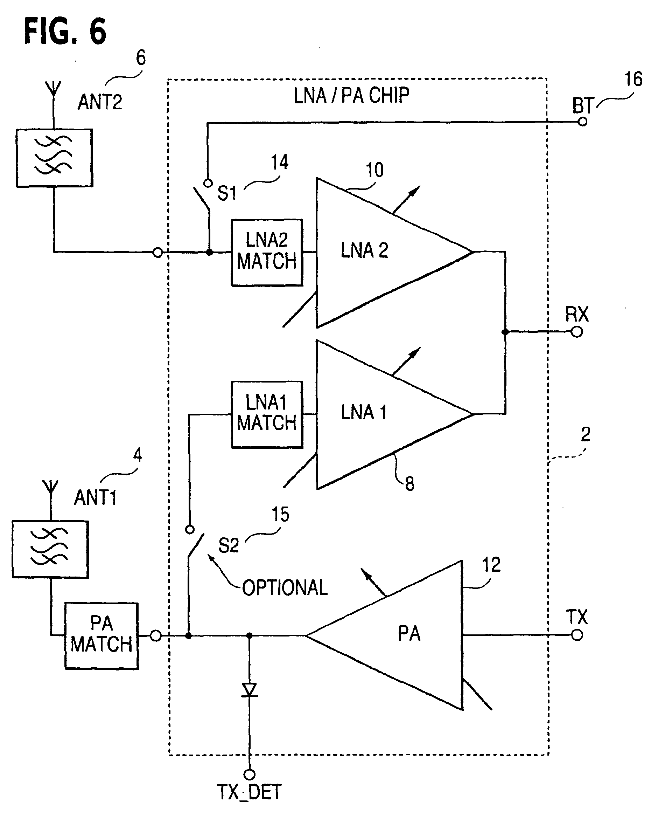

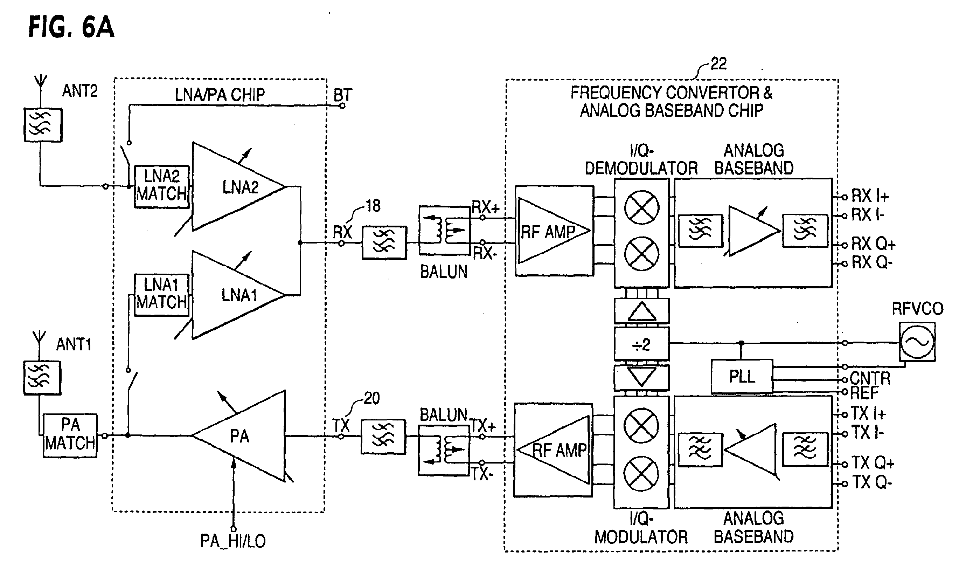

During transmission in a half-duplex transceiver using dual antenna transceiver architecture of this invention removes the need to use discrete switches in the transceiver end. It improves power and low noise amplifier performance. Referring to Figure 6 and 6A, this invention resolves a problem of how to prevent signal leakage between a PA and LNA during transmission in a half duplex receiver. The transceiver front-end chip includes two low noise amplifiers (LNA1 and LNA2) to receive through either of the antennas ANT1 or ANT2 and a power amplifier (PA) to transmit through ANTI without having any switches in the signal path to direct the signal.

During transmission the bias currents of the LNAs are turned off and the input impedance of the LNA1 is such that the output power of the PA is directed to the Ant1. Accordingly, the need to close the switch as well as the need to have a switch in the critical path from the PA output to the transmit antenna is avoided. In the receiving state only one of the LNAs is used and the PA bias is turned off. The receive path of either ANT1 or ANT2 is chosen by turning on one of the LNAs. The PA output impedance is such that if receiving through ANT1 the power is directed to the LNA1 input.

The same method is applied in LNA outputs. The output impedance of the LNA that is off does not load the other LNA that is on so there is no need of a switch. BT input/output is an option to provide access through the S1 to ANT2 for a BT module in the system.

It is an object of this invention to eliminate the need for discrete switches in the transceiver end in a half-duplex transceiver with antenna diversity.

It is another object of this invention to improve power and low noise amplifier performance.

It is yet another object of this invention to prevent signal leakage between a power amplifier and a low noise amplifier during transmission in a half-duplex receiver.

BRIEF DESCRIPTION OF THE DRAWINGS

Figure 1 is a diagram of a WLAN network conforming to IEEE standard 802.11.

Figures 2A and 2B are prior art switches to isolate a LNA from the PA during transmission and reception.

Figure 3 is a diagram of a prior art circuit with a switch in the signal path to achieve diversity receiving.

Figure 4 is a diagram of a prior art 2.4 GHZ WLAN radio chip set supplied by intersil used in a half-duplex transceiver.

Figure 5 is a diagram of a prior art micro strip switch used by AT&T to isolate a PA from a LNA during transmission and reception.

Figure 6 is a schematic diagram of the circuit architecture for a switch to select antennas used in this invention.

Figure 6A is a schematic diagram of the circuit architecture for a switch to select antennas used in this invention in communication with a frequency converter and analog baseband chip.

Figure 7 is a table of the states of the LNAs, PA and switches in various reception and transmission modes.

Figure 8 is a schematic diagram of circuit architecture for a switch to select antennas used in this invention in which a switch isolates a PA from a LNA.

Figure 9 is a schematic diagram of circuit architecture for a switch to select antennas used in this invention in which a switch isolates a PA from a LNA.

Figure 10 is a schematic diagram of circuit architecture for a switch to select antennas used in this invention in which a quarter-wave transformer isolates a PA from a LNA.

Figure 11 is a schematic diagram of circuit architecture for a switch to select antennas used in this invention in which a passive network M4 replaces the quarter-wave, transformer of Figure 10 to isolate the PA output from the LNA.

Figure 12 is a schematic diagram of circuit architecture for a switch to select antennas used in this invention in which a balanced-unbalanced transformer (BALUN) and switch are used to isolate a differential PA from a LNA.

Figure 13 is a schematic diagram of circuit architecture for a switch to select antennas used in this invention in which a balanced-unbalanced transformer (BALUN) and quarter-wave transformer are used to isolate a differential PA from a LNA.

DETAILED DESRIPTION OF THE INVENTION

The IEEE issued a standard 802.11 for wireless LAN. It defines a transmission rate of up to 2Mbps over infrared or radio frequency bands. The standard has been expanded as IEEE 802.11 with transmission rates of 11Mbps. The standard also includes the media access protocol Carrier Sense Multiple Access with Collision Avoidance (CSMA/CA), which means that devices operating on the standard may communicate with wired Ethernet LANs.

The standard has three physical layers. One is an optical based physical layer implementation that uses infrared to transmit data. It also has two RF based physical layer options. One is a DSSS and FHSS. Both operate in the 2.4-GHz ISM band.

The DSSS has a peak data rate of 2-MPS with an optional fallback to 1 Mps in a very noisy environment. The FHSS implementation operates at 1-Mps and allows for optimal operation at 2-Mps in a very clean environment.

MAC based on IEEE 802.11 standard works seamlessly with the Ethernet via a bridge to ensure that wireless and wired nodes on an enterprise LAN are indistinguishable logistically and operate together. The 802.11 MAC is different from the wired Ethernet MAC. An access point connects a wireless LAN channel to a wired LAN backbone to bridge the difference in protocols. The wireless LAN standard uses a carrier sense multiple access with collision avoidance MAC scheme. The standard Ethernet uses a collision detection scheme.

Roaming is provided in the IEEE 802.11 standard to allow a party to roam among multiple access points on the same or separate channels. For example, an AP transmits a beacon signal at regular intervals including a time stamp for client synchronization, a traffic indication map and indication of supported data rates. Roaming clients use the beacon to gauge the strength of their existing connection to an access point. If the connection is weak, the roaming station may attempt to associate with a new access point. The standard also provides for power management when the mobile unit is put in sleep mode. A sleeping unit may miss critical data. To solve this problem, access points include buffers to queue messages.

User demand for higher bit rates and international availability of the 2.4 GHz band has spurred the development of a higher-speed extension to the 802.11 standard. A proposal was selected by the IEEE in July 1998 for a standard that describes a Physical (PHY) providing a basic rate of 11 Mb/s and a fallback rate of 5.5 Mb/s. This PHY is a fourth mode to be used in conjunction wit the already standardized MAC.

A second IEEE 802.11 standard working group has moved to standardize yet another PHY option that offers even higher bit rates in the 5.2 GHz band.

This development was motivated by the adoption by the FCC of an amendment to Part 15 of its rules. The amendment made available 300 MHz of spectrum in the 5.2 GHz band intended for use by a new category of unlicensed equipment called unlicensed national information infrastructure (UNNI) devices.

This new 802.11 standard selected orthogonal frequency-division multiplexing (OFDM) as the basis for the new 5 GHz standard with target data rates in the range of 6-54 Mb/s. This new standard is the first to use OFDM in packet-based communications. The use of OFDM was previously limited to continuous transmission systems like digital audio broadcasting (DAB) and digital video broadcasting (DVB). Following the IEEE 802.11 decision, High-Performance LAN (HIPERLAN) type 2 and Multimedia Mobile Access Communication (MMAC) also adopted OFDM for their PHY standards.

Like the IEEE 802.11 standard, the European Telecommunications Standards Institute (ETSI) HIPERLAN type 1 standard specifies both MAC and PHY. However, unlike IEEE 802.11, no HIPERLAN type 1 compliant products are available in the marketplace. A newly formed ETSI working group, Broadband Radio Access Networks (BRAN), is now working on the extensions to the HIPERLAN standard including HIPERLAN type 2, a wireless indoor LAN with quality of service (QoS) provision, HiperLink, a wireless indoor backbone and HiperAccess, an outdoor fixed wireless network providing access to a wired infrastructure. There are two main differences between HIPERLAN types 1 and 2. First, HIPERLAN 1 has a distributed MAC without QoS provisions, while HIPERLAN type 2 has these provisions using a centralized scheduled MAC. Second, the PHY of HIPERLAN type 1 is based on single-carrier Gaussian minimum shift keying (GMSK), while HIPERALN type 2 uses OFDM. In Japan the Ministry of Post and Telecommunications started a standardization effort of MMAC systems that includes ultra-high-speed WLAN supporting large-volume data transmission at speeds up to 156 Mb/s using frequencies in the 30-300 GHz band and high-speed wireless access at 25-30 Mb/s in the super-high frequency (SHF) band (3-60GHz).

The new high rate wireless LAN standards are more fully described in an article in IEEE Communications Magazine, December, 1999, pps. 82-88, Richard van Nee et al., herein incorporated by reference. The above references to the new high speed wireless LAN standards are excerpted from this article.

Bluetooth (BT) is an alliance between mobile communications and mobile computing companies to develop a short-range communications standard allowing wireless data communications at ranges of about 10 meters. It allows for the replacement of the many proprietary cables that connect one device to another with one universal short-range radio link. For instance, BT radio technology built into both the cellular telephone and the laptop replaces the cumbersome cable used today to connect a laptop to a cellular telephone. Printers, PDA's, desktops, fax machines, keyboards, joysticks and virtually any other digital device can be part of the BT system.

The BT Standard encompasses a standard communications interface and a low-cost computer chip. It is a cross between the DECT and iRDA technologies. BT does not involve mobile network transactions. Its spectrum is freely available to use in the unlicensed spectrum area at 2.45 GHz. Data transmission speeds using Bluetooth are expected to be between 720 kbps and one megabit per second (Mbps).

Bluetooth facilitates wireless Personal Area Networks in which networks of different handheld computing terminals and mobile terminals can communicate and exchange data even on the move and when there is no line-of-sight between those terminals. BT means that if users have several BT enabled portable terminals they may use them with all the advantages of an integrated smart phone without having to re-enter data or find the most recent versions on different terminals.

This kind of synchronization and exchange of data are BT's major applications, as are electronic commerce applications such as electronically paying for parking meters, bus tickets, shopping, movies and so on. Smart offices are envisaged in which an employee with a BT device is automatically checked in when entering the building and this triggers a series of actions such as lights and PCs being switched on. BT runs in the background and line of sight is not needed for the machines to automatically initiate and trigger processes.

Radio half-duplex transceivers used in mobile terminals such as cell phones will use transceivers preferably with two antennas to operate under the IEEE 802.11 standard and BT in a 2.4GHz WLAN. Switching between antennas has required discrete switching circuitry and resulted in power loss and signal leakage between a power amplifier and low noise amplifier consuming power. The solution to this problem is to employ the circuitry 2 shown in Figure 6 and 6A. Two antennas 4 and 6 are used to achieve receiver diversity. During transmission the bias currents of the LNA1 8 and LNA2 10 are turned off and the input impedance of the LNA1 8 is such that the output power of the PA 12 is directed to the ANT1 4. The need for a switch is avoided.

In a receiving state only one of LNA1 8 or LNA2 10 is used and the PA 12 is biased as turned off. The receive path for either LNA1 8 or LNA2 10 is selected by turning on only one them. The PA 12 output impedance is higher such that if receiving through ANT1 4 power is directed to LNA1 8 input. The same method is applied for LNAs 8 and 10 outputs. The output impedance of the LNA 8 or 10 that is off does not load the other LNA 8 or 10 that is on and so the need for a switch is avoided. In the case where the PA output is high enough to bias the LNA1 input, a switch S2 15 may be used to isolate LNA1 as will be further discussed.

BT input/output is an option by providing access through switch S1 14 to ANT2 6 to a BT module 16.

Both the PA and LNAs are gain controllable amplifiers. The PA also has a power saving property. In low gain settings the bias current are reduced in order to improve efficiency. A high/low signal to the PA may be used to control the power saving function.

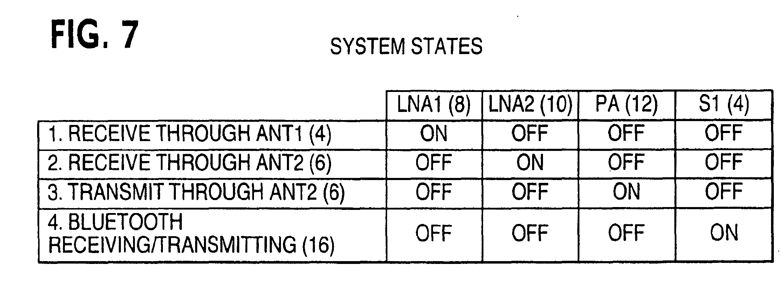

Referring to Figure 6A the transceiver arrangement above described is shown in connected through its receive 18 and transmit 20 outputs to a frequency converter & analog baseband chip 22 as found in a mobile terminal. Referring to Figure 7, the four possible states of the system are: (1) receive through ANT1 4; (2) receive through ANT2 6; (3) transmit through ANT1 4, and (4) BT receiving/transmitting 16. Shown in the table are the corresponding on/off conditions of the LNAs 8 and 10, PA 12 and switch 14.

Avoidance of the need of switches at the TX path and the LNA2 input improves the performance of the PA 12 and LNAs 8 and 10 in terms of efficiency, noise and compression compared to the conventional solution. The benefit to the PA 12 efficiency is computed as follows. The transceiver is in the transmitting state and the critical path is from PA 12 output to ANT1 4. Assume that the attenuation is 0.5dB. Designating the output power measured at the filter input as P1 without the switch S1 14 and P2 with the switch S1 14. Ideally P1 is 0.5dB more than P2.This will directly increase the power efficiency of the PA 12 if the DC power consumption is kept constant. The increase in efficiency as a percentage is calculated as follows:

$$10\log(P1/P2)=0.5dB$$

$$P1/P2=10^{0.5/10} = 1.12$$

Resulting in an increase in efficiency of 12%.

There is a positive effect on LNA noise. When the transceiver is receiving and the path is from antenna to the LNA input with a switch noise of 0.5dB, attenuation of 0.5dB and an LNA noise of 1.5dB, the noise of the combined switch and LNA is as follows:

$$NF_{TOT} = NF_{LNA} + A_{SWITCH} = 1.5dB + 0.5dB=2.0dB$$

If the switch is not present in the signal path the noise resulting from it is eliminated thereby reducing noise.

A further benefit is to reduce the size of a chip using this system by eliminating switches. A further savings in the IC can be achieved by sharing some of the passive components.

It is possible that the PA output power is high enough to bias the LNA1 during transmission even if LNA1 is turned off. Although the signal power leakage is low it still causes unwanted non-linearity and has to be prevented. The following aspects of the invention address this possibility.

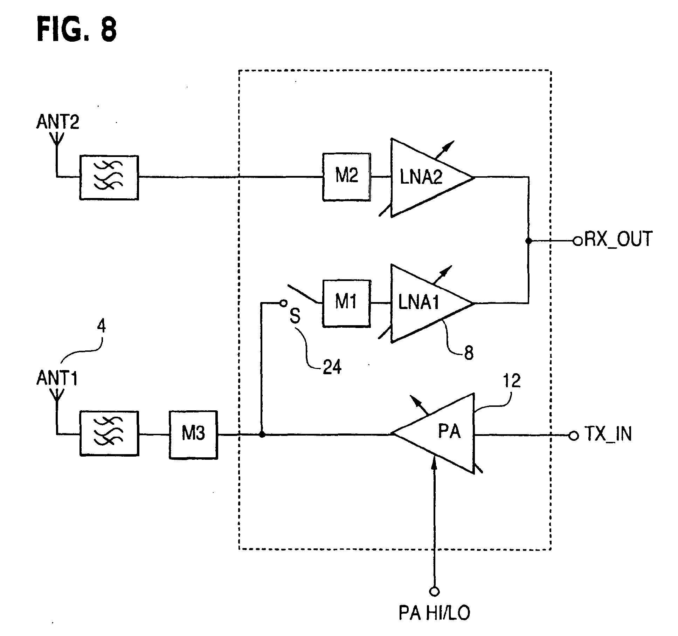

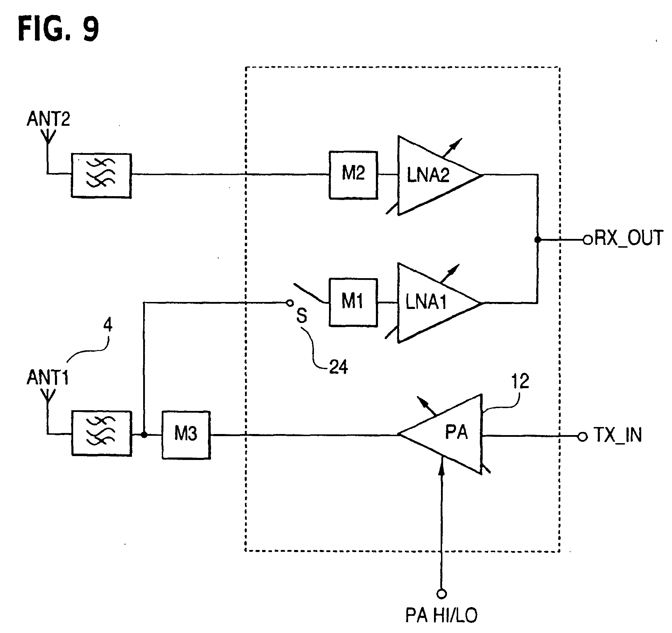

Another embodiment of the invention is shown in Figures 8. In Figure 8 the bias effect and signal leakage are prevented by the addition of a switch 24 in the signal path between the PA 12 output and the LNA1 8 input. In this instance the PA 12 output is still directly connected to the ANT1 but not the LNA1 8 input. As a consequence the attenuation of the switch 24 decreases the performance of the LNA1 8 by decreasing the SNR in its input when in the receive state. This is also shown implemented in Figure 9 in which the switch is interposed ahead of the line match between ANT1 4 and the PA 12. In both figures, line matching is represented by the function "M" as shown.

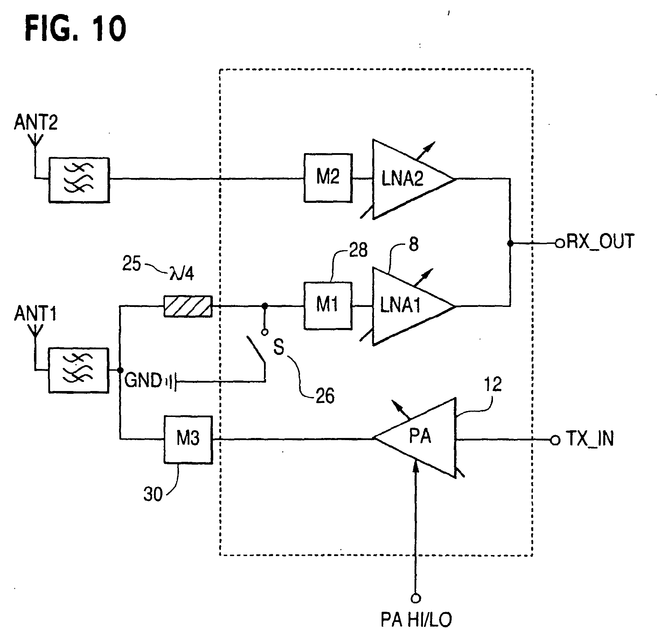

In Figure 10 a further method to compensate for high output power is shown. In lieu of a switch in series with the LNA1 8 input a quarter-wave transformer 25 is inserted. During transmission the quarter-wave transformer is connected to ground through the closed switch 26. As a result the LNA1 input seems like infinite impedance to the PA 12 thereby canceling the bias effect. When the receiving switch 26 is opened, the quarter-wave transformer is just a piece of transmission line that can be part of the LNA1 8 line matching 28 and 30. In this circuit, the SNR ratio is lower than in the circuits described in Figures 8 and 9.

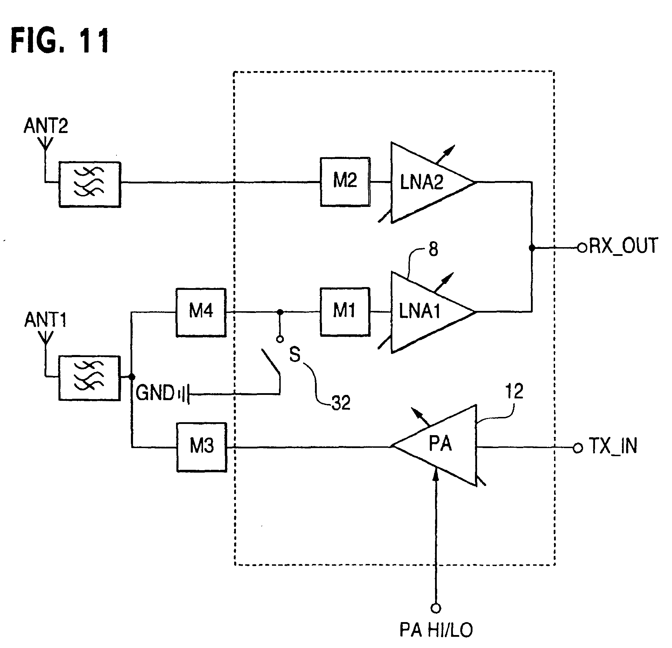

Referring to Figure 11, the quarter-wave transformer 25 in Figure 10 can be replaced with a direct ground of LNA1 8 by switch 32. When switched to ground, LNA1 8 sees infinite impedance and is isolated from PA 12. Other passive components such as capacitors and inductors may also be used isolate LNA1 8 input from PA 12 output.

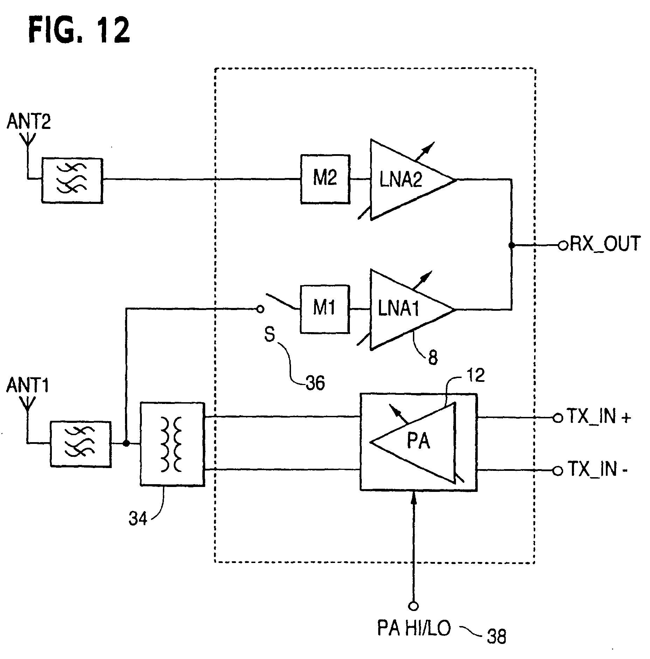

Referring to Figure 12 a BALUN 34 is placed in series between ANT1 4 PA 12. A switch 36 is in series between the ANT1 4 and the induction coil 34 connecting to LNA1 8. When open, switch 36 isolates the LNA1 8 from the BALUN 34. When switch 36 is closed and the circuit between the BALUN 34 and the PA 12 is completed the BALUN regulates power output from the PA 12 to the ANT1 4 and in so doing isolates the LNA1 8 from high power output. In this implementation, PA 12 has a high and low power selection capability 38 to preserve power.

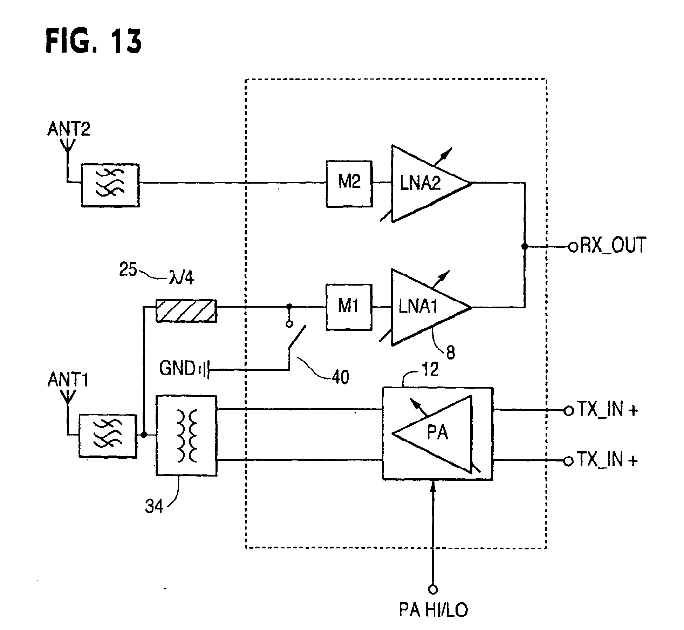

Referring to Figure 13, a circuit including a BALUN 34 in series between ANT1 4 and a PA 12 is further in series with a quarter-wave transformer 25 and the input of LNA18. The quarter wave-transformer 25 isolates the PA 12output from the LNA1 8 input. A switch to ground 40 when closed loads an infinite impedance on LNA1 8 input thereby isolating it from the power from the PA 12 output to ANT1 8.

DEFINITIONS

| | |
|---|---|
| ANT | Antenna |
| AP | Access Point |
| Bluetooth | A wireless radio link to existing data networks |
| BSS | Basic Service Set |
| CA | Collision avoidance |
| CSMA | Carrier Sense Multiple Access |
| DECT | Digital European Cordless Telephone |
| DSSS | Direct Sequence Spread Spectrum |
| ESS | Extended Service Set |
| FHSS | Frequency Hoping Spread Spectrum |
| IC | Integrated Circuits |
| IRDA | infra Red Data Association |
| ISM | Industrial, Scientific and Medical |
| LLC | Logical Link Control |
| LNA | Low Noise Amplifier |
| MAC | Media Access Control |
| PA | Power Amplifier |
| PC | Personal Computer |
| RF | Radio Frequency |
| RX | Receive |
| S | Switch |
| SNR | Signal to Noise Ratio |
| TX | Transmit |
| WLAN | Wireless Local Area Network |

**Claims**

1. A mobile communication device for switching among antennas for receiving and transmitting comprising:

   two or more antennas;
   two or more LNAs communicating with one each of said antennas for amplifying signals received by said antennas, said LNAs having bias currents applied thereto;
   a PA connected to the input of one LNA and its associated antenna; and means to switch the bias currents of at least one LNA on and off.

2. The device of Claim 1 further comprising a means to isolate said PA from the associated LNA.

3. The device of Claim 1 further comprising means to connect one or more LNAs with a radio receiver.

4. The device of Claim 1 further comprising LNAs with high input impedance relative to the PA at TX state.

5. The device of Claim 4 further comprising means to tum the bias currents of said LNAs on and off.

6. A mobile communications transceiver with two or more antennas able to select to an antenna to receive signals or transmit on one said antenna comprising:

   two or more LNAs connected to one each of said antennas to amplify signals;
   a PA connected to the input of one of said LNAs and its associated antennas, said LNA having relatively higher input impedance then said PA output; and
   means to select antennas for receiving and for transmitting.

7. A transceiver as claimed in Claim 6 further comprising means to switch the bias currents on and off to said LNAs to thereby select antennas for receiving and transmitting.

8. A transceiver as claimed in Claim 6. having passive means to isolate at least one LNA input from a PA output.

9. A transceiver as claimed in Claim 7 further comprising relatively higher PA output impedance then the LNA associated with it and means to turn the bias off to the PA during receiving signals to direct signal reception through the antenna connected to said LNA.

10. A transceiver as claimed in Claim 7 in a common circuit for transmitting and receiving signals further comprising isolating the impedance load of a LNA not receiving a signal from an antenna from a LNA receiving signal from an antenna by switching the LNA not in use off using its bias current.

11. A transceiver as claimed in Claim 6 further comprising a connection with a switch to connect one of said antennas to a Bluetooth radio module.

12. A method of selecting antennas for receiving or transmitting in a transceiver with two or more antennas and LNAs connected each to at least one of said antennas for boosting signals and a PA connected to one of said antennas in parallel with said LNA connected to said antenna, said LNA having a higher input impedance then said PA and said PA having a higher output impedance then said LNA input, said elements in an electrical circuit having bias currents applied to said LNAs and PA, having the step of:
selectively turning the LNA bias currents on and off.

13. The method of Claim 12 having the further step of selectively turning the bias current of said PA on and off.

14. The method of Claim 13 having the further step of selectively activating a switch to link an antenna to a radio module.

15. A method of selecting antennas for receiving and transmitting in a transceiver with two or more antennas, an LNA input connected to each of said antennas and a PA output connected to at least one of said antennas to broadcast signal with at least two possible transmission power levels, having the steps of:

isolating bias currents from at least one of said LNA inputs; and
applying power from said PA output to at least one of said antennas to broadcast signals.

16. The method of claim 15 having the further step of isolating said LNA input by introducing passive impedance to said LNA input.

# FIG. 1

EXTENDED SERVICE SET

SERVER

DISTRIBUTION SYSTEM

BASIC SERVICE SET

ACCESS POINT

STATION

STATION

STATION

ACCESS POINT

STATION

STATION

BASIC SERVICE SET

EP 1 124 337 A2

## FIG. 2A

## FIG. 2B

FIG. 3

FIG. 4

PRISM I - TO 4Mbps
IEEE802.11 2.4 GHz WIRELESS LAN RADIO CHIP SET

PRISM WLAN CHIP SET

intersil

home | communications | power | space & defense
search | products | applications | press | support | site map | contact us | careers

# FIG. 5

ANT1   ANT2

MICROSTRIP "SWITCH"

S2

S1

LNA

PA

EP 1 124 337 A2

# FIG. 6

## FIG. 6A

EP 1 124 337 A2

# FIG. 7

SYSTEM STATES

| | LNA1 (8) | LNA2 (10) | PA (12) | S1 (4) |
|---|---|---|---|---|
| 1. RECEIVE THROUGH ANT1 (4) | ON | OFF | OFF | OFF |
| 2. RECEIVE THROUGH ANT2 (6) | OFF | ON | OFF | OFF |
| 3. TRANSMIT THROUGH ANT2 (6) | OFF | OFF | ON | OFF |
| 4. BLUETOOTH RECEIVING/TRANSMITTING (16) | OFF | OFF | OFF | ON |

EP 1 124 337 A2

# FIG. 8

# FIG. 9

# FIG. 10

ANT2

ANT1

25 — λ/4

GND

S

26

30

M2

M3

M1

LNA2

28

8

LNA1

12

PA

RX_OUT

TX_IN

PA HI/LO

# FIG. 11

ANT2

M2

LNA2

8

RX_OUT

ANT1

M4

M1

LNA1

GND

S

32

M3

PA

12

TX_IN

PA HI/LO

# FIG. 12

ANT2

M2   LNA2

RX_OUT

M1   LNA1

S

36

8

ANT1

34

12

PA

TX_IN +

TX_IN -

PA HI/LO   38

# FIG. 13